# EUROPÄISCHE PATENTSCHRIFT

(11) **EP 0 666 212 B1**
(45) Veröffentlichungstag und Bekanntmachung des Hinweises auf die Patenterteilung: **17.03.1999**
(21) Anmeldenummer: 95101186.5
(22) Anmeldetag: 28.01.1995
(51) Int. Cl.: B62M 11/14, F16D 21/04

(54) **Schaltbares Tretlagergetriebe für ein Fahrrad oder dergleichen**
Shiftable bottom bracket-gear for a bicycle and the like
Transmission manoevrable de pédalier pour une bicyclette ou similaires

(30) Priorität: 07.02.1994 CH 345/94
(43) Veröffentlichungstag der Anmeldung: 09.08.1995
(73) Patentinhaber: Schlumpf, Florian, Masch.Ing.HTL, CH-7324 Vilters (CH)
(72) Erfinder: Schlumpf, Florian, Masch.Ing.HTL, CH-7324 Vilters (CH)
(74) Vertreter: Althoff, Gerhard

(56) Entgegenhaltungen:
- EP-A- 0 562 470
- DE-B- 1 072 105
- DE-C- 419 414
- GB-A- 873 987

## Beschreibung

Die Erfindung bezieht sich auf ein Schaltbares Tretlagergetriebe für ein Fahrrad oder dergleichen, mit einer in einem Tretlagergehäuse gelagerten und mit mindestens einer Tretkurbel in Wirkverbindung stehenden hohlzylindrischen Antriebswelle, einem daran gelagerten Kettenrad, einem in parallelem Abstand dazu angeordneten und am äusseren Umfang mit mindestens einem verzahnten Planetenrad in Eingriff stehenden oder zur Lagerung desselben ausgebildeten Sonnenrad und einem zwischen dem Kettenrad und dem Sonnenrad an der Antriebswelle verschiebbar angeordneten Kupplungsglied, welches mit einer die Antriebswelle in axialer Richtung durchdringenden und an den beiden Enden jeweils mit einem Schaltglied versehenen Schaltachse in Wirkverbindung steht und in Abhängigkeit des jeweils betätigten Schaltgliedes entweder mit dem Kettenrad oder mit dem Planetenrad formschlüssig in Eingriff bringbar ist.

Aus der DE-A 38 27 819 ist ein schaltbares Tretlagergetriebe für ein Fahrrad oder dergleichen bekannt, welches ein Tretlagergehäuse, eine darin gelagerte und an beiden Enden mit einer Tretkurbel in Wirkverbindung stehende sowie in axialer Richtung von einer Schaltachse durchdrungene Antriebswelle, ein daran gelagertes Kettenrad, eine in parallelem Abstand dazu angeordnete und mit einem verzahnten Planetenrad in Eingriff stehende oder zur Lagerung des Planetenrades ausgebildete Scheibe sowie ein Kupplungsglied umfasst, welches für einen eine Drehzahländerung bewirkenden Schaltvorgang durch geringen, gegen die Schaltachse gerichteten Druck in axialer Richtung derart verschoben wird, dass das Kupplungsglied entweder mit dem Kettenrad oder mit der Scheibe formschlüssig in Eingriff steht.

Ein ähnliches Tretlagergetriebe für ein Fahrrad oder dergleichen ist aus der EP-A 0 562 470 bekannt, welches im wesentlichen eine mit Tretkurbeln in Verbindung stehende Antriebswelle, ein Kettenrad, eine parallel dazu angeordnete und mit mindestens einem Planetenrad wirkverbundene Scheibe sowie ein Kupplungsglied umfasst. Bei diesem Tretlagergetriebe sind zur Erreichung einer spielfreien, kraftübertragenden Verbindung in dem Kettenrad sowie in der Scheibe mehrere in Umfangsrichtung verteilt angeordnete Ausnehmungen vorgesehen und derart stufenweise abgesetzt ausgebildet, dass das dem Kettenrad oder der Scheibe zuführbare Kupplungsglied in einer ersten Phase mit Spiel in eine erste Ausnehmung und in einer zweiten Phase mit einer mit der ersten Ausnehmung in Verbindung stehenden zweiten Ausnehmung formschlüssig einrastend in Eingriff bringbar ist.

Der Erfindung liegt die Aufgabe zugrunde, ein schaltbares Tretlagergetriebe der bekannten Gattung derart auszubilden und dahingehend zu verbessern, dass die an den kraftübertragenden Elementen wirkende Kraft, insbesondere aber die beim Einleiten des Schaltvorganges an den einzelnen Elementen auftretende Flächenpressung unter Beibehaltung eines exakten Schaltvorganges herabgesetzt wird, wodurch eine Beschädigung der Elemente vermindert beziehungsweise weitgehend ausgeschlossen ist.

Diese Aufgabe wird gemäss der Erfindung dadurch gelöst, dass das Sonnenrad sowie das Kettenrad an den dem Kupplungsglied zugewandten Seiten jeweils mit einer in Umfangsrichtung orientierten Rasteinrichtung und das Kupplungsglied beidseitig mit einer analog ausgebildeten und in Umfangsrichtung orientierten Rasteinrichtung versehen sind, wobei das für den formschlüssigen Eingriff der einander zugewandten Rasteinrichtungen relativ zu dem Sonnenrad beziehungsweise zu dem Kettenrad auf der Antriebswelle verschiebbaren Kupplungsglied durch einen dieses sowie die Antriebwelle quer zu deren Längsachse durchdringenden Mitnehmer mit der von den Schaltgliedern in Richtung der Längsachse verschiebbaren Schaltachse wirkverbunden ist.

Ausführungsbeispiele der Erfindung werden nachstehend anhand der Zeichnung beschrieben. Es zeigt:
**Fig.1** ein in schematischer Ansicht dargestelltes und zu beiden Seiten mit einer Tretkurbel versehenes Tretlager für ein Fahrrad oder dergleichen mit schaltbarem Tretlagergetriebe;
**Fig.2** ein gemäss Pfeilrichtung II in vergrösserter Ansicht dargestelltes und an der einen Tretkurbel angeordnetes Schaltglied für eine in dem Tretlager gemäss Fig.1 angeordnete Schaltmechanik;
**Fig.3** das in Seitenansicht und teilweise im Schnitt sowie gemäss Pfeilrichtung R' relativ zur Tretkurbel verschwenkt dargestellte Schaltglied gemäss Fig. 2;
**Fig.4** das an der Tretkurbel angeordnete Schaltglied gemäss Fig.3 in eingeschwenkter Stellung;
**Fig.5** eine in Schnittansicht dargestellte erste Variante des Tretlagergetriebes mit der Schaltmechanik;
**Fig.6** eine in Schnittansicht dargestellte zweite Variante des Tretlagergetriebes mit der Schaltmechanik;
**Fig.7** eine in Schnittansicht dargestellte dritte Variante des Tretlagergetriebes mit der Schaltmechanik;
**Fig.8** ein gemäss der in Fig.7 eingezeichneten Linie VIII-VIII in Schnittansicht dargestelltes Teilstück einer Scheibe mit an der Stirnfläche angeordneter Rasteinrichtung gemäss einer ersten Variante;
**Fig.9** eine erste in perspektivischer Ansicht dargestellte Variante eines Kupplungsgliedes für die Schaltmechanik gemäss Figur 5 bis 7;
**Fig.10** das in Seitenansicht dargestellte Kupplungsglied gemäss Fig.9;
**Fig.11** das gemäss der Linie XI-XI in Schnittdraufsicht dargestellte Kupplungsglied gemäss Fig.10;
**Fig.12** ein zweite Variante des in Seitenansicht dargestellten Kupplungsgliedes;
**Fig.13** ein als Variante dargestelltes Teilstück einer Antriebswelle für das Kupplungsglied gemäss Fig.12;
**Fig.14** ein als Abwicklung dargestelltes Teilstück des während des Schaltablaufs mit den zugeordneten Elementen in Eingriff bringbaren Kupplungsgliedes; und
**Fig.15** ein als Abwicklung dargestelltes Teilstück des als weitere Ausführungsvariante dargestellten und mit den zugeordneten Elementen beim Schaltvorgang in Eingriff bringbaren Kupplungsgliedes.

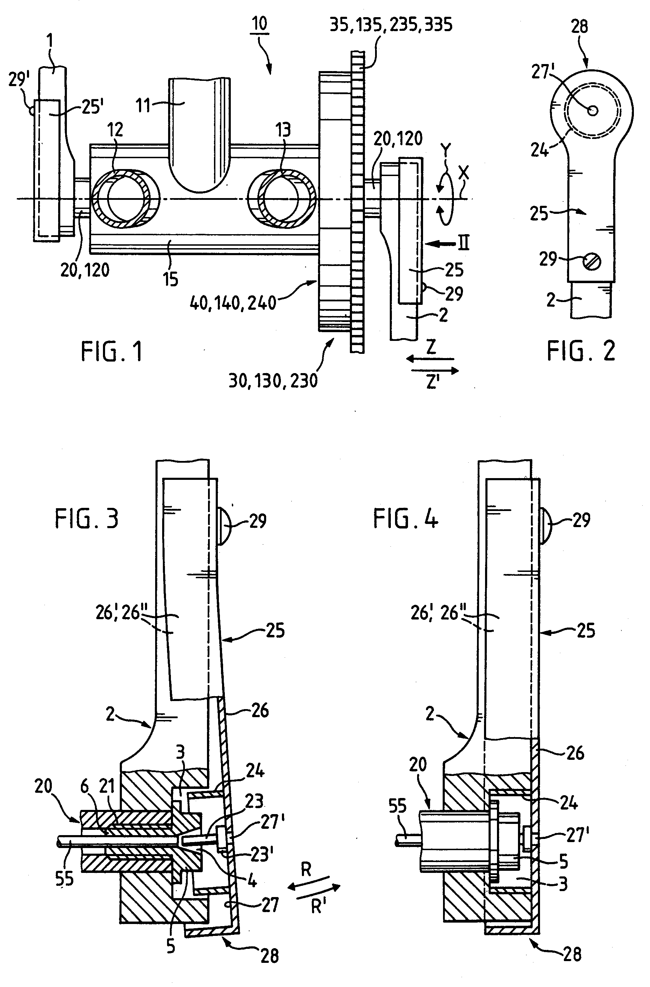

In Fig.1 ist in schematischer Ansicht ein ausgehend von einer nicht dargestellten Hinterradgabel gesehenes und in der Gesamtheit mit 10 bezeichnetes Tretlager für ein Fahrrad oder dergleichen dargestellt. Das Tretlager 10 umfasst im wesentlichen ein Tretlagergehäuse 15, eine darin gelagerte und das Tretlagergehäuse 15 in axialer Richtung durchdringende Antriebswelle 20, ein mit 35, 135, 235 oder 335 bezeichnetes Kettenrad sowie zwei in axialer Richtung im Abstand zueinander an der Antriebswelle 20 angeordnete Tretkurbeln 1 und 2. Die Tretkurbeln 1 und 2 sind in an sich bekannter Weise an der Antriebswelle 20 gelagert und zusammen mit dieser um eine Achse X in Pfeilrichtung Y drehbar. An dem Tretlagergehäuse 15 sind weiterhin zwei im Abstand zueinander angeordnete Rohre 12 und 13 einer nicht näher dargestellten Hinterradgabel sowie ein Rohrstück 11 eines nicht näher dargestellten Fahrradrahmens oder dergleichen angeordnet und mit nicht dargestellten Mitteln befestigt.

Das Tretlager 10 umfasst weiterhin ein in der Gesamtheit mit 30; 130 oder 230 bezeichnetes Tretlagergetriebe, welches beispielsweise in einem Getriebegehäuse 40; 140 oder 240 angeordnet ist. Die Schaltfunktion des Tretlagergetriebes 30; 130 oder 230 erfolgt im wesentlichen mittels je einem an der Tretkurbel 1 und 2 angeordneten Schaltglied 25 und 25', mittels welcher eine in der Antriebswelle 20 koaxial gelagerte Schaltachse 55 (Fig.3) gemäss Pfeilrichtung Z beziehungsweise Z' in axialer Richtung verschiebbar ist.

Fig.2 zeigt das gemäss Pfeilrichtung II (Fig.1) in Ansicht dargestellte und an der einen Tretkurbel 2 angeordnete Schaltglied 25, welches durch ein Befestigungsmittel 29 in Form einer Schraube oder dergleichen daran befestigt und wie in Fig.3 dargestellt, relativ zu der Tretkurbel 2 schwenkbar ist. Das mit der Schraube 29' an der Tretkurbel 1 befestigte Schaltglied 25' ist analog ausgebildet.

In Fig.3 ist das an der Tretkurbel 2 angeordnete Schaltglied 25 in Seitenansicht und teilweise im Schnitt dargestellt, und man erkennt ein Teilstück der Antriebswelle 20, welche zur einschraubbaren Aufnahme eines mit einem Gewindestück 6 versehenen Stellgliedes 5 ein Innengewinde 21 aufweist. Das Stellglied 5 hat eine nicht bezeichnete Bohrung, in welcher die Schaltachse 55 koaxial gelagert ist. Im vorderen Bereich hat das Stellglied 5 eine sich konisch erweiternde Ausnehmung 4, in welche bei Betätigung des Schaltgliedes 25 in Pfeilrichtung R ein daran angeordneter Schaltbolzen 23 eingeführt und mit der Schaltachse 55 in Eingriff gebracht wird.

Das Schaltglied 25 ist in nicht dargestellter Weise im Profilquerschnitt U-förmig ausgebildet und umfasst eine Rückwand 26, zwei daran angeformte Seitenwände 26',26'' sowie ein die Tretkurbel 2 umgreifendes Haubenteil 28. An der der Tretkurbel 2 zugewandten Innenseite 27 des Schaltgliedes 25 ist ein Führungskörper 24 befestigt. Der Führungskörper 24 ist in eine an der Tretkurbel 2 vorgesehene Ausnehmung 3 einschwenkbar. Die Ausnehmung 3 ist derart ausgebildet und bemessen, dass bei der um die nicht bezeichnete Achse des Befestigungsmittels 29 in Pfeilrichtung R relativ zur Tretkurbel 2 orientierten Bewegung des Führungskörpers 24 in die Ausnehmung 3 geschwenkt und dabei der Schaltbolzen 23 mit der Schaltachse 55 in Eingriff gebracht wird, und bei der in Pfeilrichtung R' orientierten Schwenkbewegung ausser Eingriff gebracht wird. Der Schaltbolzen 23 ist in einem an der Innenseite der Rückwand 26 angeordneten Kopfstück 23' gehalten und für eine exakte Einstellung des Schaltpunktes relativ zu der Schaltachse 55 verstellbar sowie mit nicht dargestellten Mitteln fixierbar. Zur Verstellung des Schaltbolzens 23 ist in der Rückwand 26 des Schaltgliedes 25 eine Bohrung 27' vorgesehen, durch welche der Schaltbolzen 23 mit einem entsprechenden Werkzeug, beispielsweise mit einem Schraubenzieher (nicht dargestellt) oder dergleichen relativ zur Schaltachse 55 verstellbar ist.

Fig.4 zeigt das teilweise im Schnitt und gemäss Pfeilrichtung R (Fig.3) in eingeschwenkter Stellung dargestellte Schaltglied 25. In dieser Stellung umschliesst das Schaltglied 25 mit dem Haubenteil 28 das mit der Ausnehmung 3 versehene untere Teilstück der Tretkurbel 2. In dieser Stellung ist das andere Schaltglied 25' (Fig.1) analog der in Fig.3 dargestellten Stellung ausgeschwenkt.

An dieser Stelle wird darauf hingewiesen, dass anstelle der vorstehend beschriebenen und zur Durchführung des Schaltvorgangs ausgebildeten sowie mit der Schaltachse 55 in Eingriff bringbaren Schaltglieder 25 oder 25' auch die entsprechend in der EP-A 0 562 470 offenbarten, haubenförmig ausgebildeten und im wesentlichen in der jeweiligen Tretkurbel eingesetzten Schaltglieder verwendet werden können.

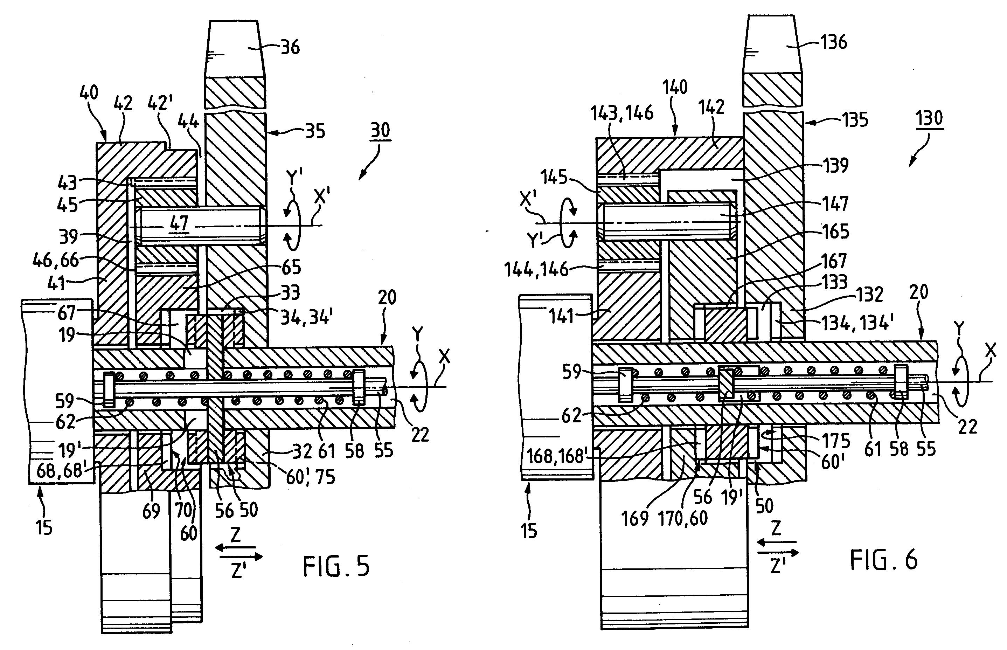

Fig.5 zeigt als erstes Ausführungsbeispiel das in Schnittansicht und in grösserem Massstab dargestellte Tretlagergetriebe 30 mit der in dem Getriebegehäuse 40 angeordneten Schaltmechanik. Die Teile 30 und 40 werden zur Vereinfachung nachstehend als Getriebe 30 beziehungsweise als Gehäuse 40 bezeichnet. Weiterhin erkennt man in Fig.5 ein Teilstück des Tretlagergehäuses 15, die darin mit nicht näher dargestellten Mitteln koaxial gelagerte Antriebswelle 20, das Kettenrad 35 mit der Verzahnung 36 sowie das im Abstand 44 dazu angeordnete Gehäuse 40. Das Gehäuse 40 hat eine Rückwand 41 sowie ein daran angeformtes Ringteil 42, welches an der nicht näher bezeichneten Innenseite eine Innenverzahnung 43 aufweist. Die Rückwand 41, das Ringteil 42 sowie das zugeordnete Kettenrad 35 bilden in zusammengebautem Zustand einen mit 39 bezeichneten Innenraum. An dem Kettenrad 35 ist mindestens ein Lagerbolzen 47 angeordnet, an welchem ein um eine Achse X' in Pfeilrichtung Y' drehbar gelagertes und mit einer Aussenverzahnung 46 versehenes Planetenrad 45 angeordnet ist. Das Planetenrad 45 steht einerseits über die Aussenverzahnung 46 mit der Innenverzahnung 43 des Ringteils 42 und andererseits mit einer eine Aussenverzahnung 66 aufweisenden Scheibe 65 in Eingriff. Bei dem in Fig.5 dargestellten Ausführungsbeispiel ist das auf der Antriebswelle 20 gelagerte Kettenrad 35 als Trägerelement für das Planetenrad 45 und die ebenfalls auf der Antriebswelle 20 gelagerte und mit der Aussenverzahnung 66 versehene Scheibe 65 als Sonnenrad ausgebildet.

Bei einer nicht dargestellten Variante sind an dem Kettenrad 35 zwei diametral gegenüberliegende oder mehrere am Umfang verteilt angeordnete Planetenräder 45 vorgesehen, welche jeweils mit der Innenverzahnung 43 des Ringteils 42 sowie mit der Aussenverzahnung 66 des Sonnenrades 65 in Eingriff stehen. An dem Ringteil 42 ist zur Aufnahme und Befestigung einer hier nicht dargestellten Abdeckung eine umlaufende Ausnehmung 42' vorgesehen. Eine derartige, das Eindringen von Spritzwasser, Staub und Schmutz in den Innenraum 39 verhindernde und zwischen dem Gehäuse 40 und dem Kettenrad 35 angeordnete Abdeckung ist ebenfalls aus der EP-A 0 562 470 an sich bekannt.

Das Kettenrad 35 sowie das scheibenförmige Sonnenrad 65 sind je mit einer Ausnehmung 33 beziehungsweise 67 versehen, wobei die Ausnehmungen 33,67 jeweils durch eine zugeordnete Wand 32 beziehungsweise 69 begrenzt sind. An den einander zugewandten, nicht näher bezeichneten Innenseiten der beiden Wände 32 und 69 ist je eine in der Gesamtheit mit 70 beziehungsweise 75 bezeichnete Rasteinrichtung angeordnet. Die an der Wand 69 des Sonnenrades 65 angeordnete Rasteinrichtung 70 hat eine Anzahl in Umfangsrichtung verteilt angeordnete und durch Ausnehmungen 68' beabstandete Rastnocken 68. Die an dem Kettenrad 35 angeordnete Rasteinrichtung 75 ist analog ausgebildet und umfasst eine Anzahl in Umfangsrichtung verteilt angeordnete und durch Ausnehmungen 34' beabstandete Rastnocken 34.

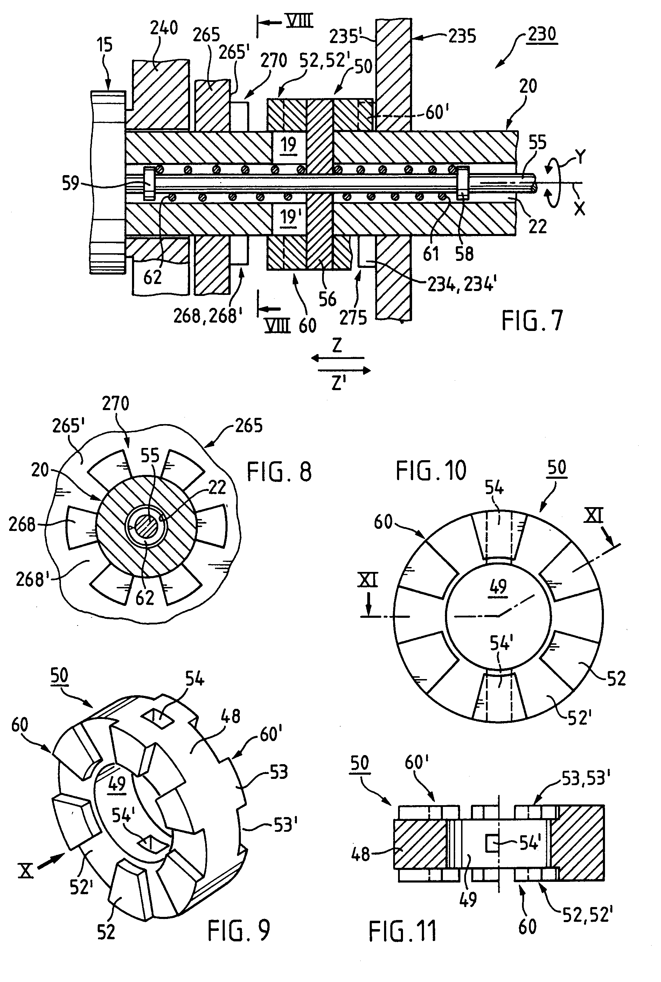

Die in axialer Richtung der Antriebswelle 20 im Abstand zueinander angeordneten Rasteinrichtungen 70 und 75 sind jeweils mit einem zwischen dem Kettenrad 35 und dem Sonnenrad 65 angeordneten und in axialer Richtung der Antriebswelle 20 verschiebbaren Kupplungsglied 50 in Eingriff bringbar. Das auf der Antriebswelle 20 gelagerte und in Pfeilrichtung Z oder Z' verschiebbare und mit dem Kettenrad 35 oder Sonnenrad 65 in Eingriff bringbare Kupplungsglied 50 ist beidseitig mit einer Rasteinrichtung 60 beziehungsweise 60' versehen. Das Kupplungsglied 50 sowie ein weiteres Ausführungsbeispiel desselben wird später in Verbindung mit den Figuren 9 bis 12 noch näher beschrieben.

In der Antriebswelle 20 sind, wie in Fig.5 dargestellt, im Bereich des Sonnenrades 65 und Kettenrades 35 zwei diametral gegenüberliegende Längsschlitze 19 und 19' vorgesehen, in welchen ein die Antriebswelle 20 sowie das Kupplungsglied 50 in radialer Richtung durchdringendes und mit der Schaltachse 55 wirkverbundenes Mitnehmerteil 56 angeordnet ist. Die Antriebswelle 20 wird weiterhin von einer in axialer Richtung orientierten Bohrung 22 durchdrungen, in welcher koaxial die als Stössel ausgebildete und mit den beiden Schaltgliedern 25,25' (Fig.1) wirkverbundene Schaltachse 55 gelagert ist. Dem an der Schaltachse 55 angeordneten und in den Längsschlitzen 19,19' geführten Mitnehmerteil 56 ist an beiden Seiten eine Druckfeder 61 und 62 zugeordnet. Die Rückstellkraft der beiden Druckfedern 61,62 ist durch entsprechend auf der Schaltachse 55 in axialer Richtung verstellbare Feststellglieder 58 und 59 einstellbar.

Fig.6 zeigt als zweites Ausführungsbeispiel das in grösserem Massstab und in Schnittansicht dargestelltes und in der Gesamtheit mit 130 bezeichnetes Getriebe und man erkennt ein Teilstück des Tretlagergehäuses 15, die darin gelagerte Antriebswelle 20, das Kettenrad 135 mit der Verzahnung 136 sowie das Gehäuse 140. Die mit den Längsschlitzen 19 und 19' versehene Antriebswelle 20 und das daran verschiebbar gelagerte Kupplungsglied 50 sowie die damit wirkverbundenen Teile 56; 55; 58,59 und 61,62 sind analog der vorstehend in Verbindung mit Fig.5 beschriebenen Elemente ausgebildet.

Abweichend von dem ersten Ausführungsbeispiel gemäss Fig.5 ist bei dem Ausführungsbeispiel gemäss Fig.6 das aus einem mit einer Innenverzahnung 143 versehene Ringteil 142 gebildete Gehäuse 140 seitlich an dem Kettenrad 135 angeordnet und mit nicht dargestellten Mitteln, beispielsweise durch eine Schraubverbindung oder dergleichen befestigt. Die mit dem Tretlagergehäuse 15 verbundene Rückwand 141 ist korrespondierend zu der Innenverzahnung 143 mit einer Aussenverzahnung 144 versehen. Das Ringteil 142 sowie die als Sonnenrad ausgebildete Rückwand 141 sind über mindestens ein mit einer Aussenverzahnung 146 versehenes Planetenrad 145 wirkverbunden. Auch bei diesem Ausführungsbeispiel können mehrere, diametral zueinander angeordnete und mit der Innenverzahnung 143 und Aussenverzahnung 146 in Eingriff stehende Planetenräder 145 vorgesehen werden. Das Ringteil 142, die Rückwand 141 sowie das im Abstand dazu angeordnete Kettenrad 135 bilden zusammen einen Innenraum 139 zur Aufnahme einer auf der Antriebswelle 20 gelagerten Scheibe 165.

An der als Trägerelement ausgebildeten Scheibe 165 ist mindestens ein Lagerbolzen 147 angeordnet und mit nicht dargestellten Mitteln befestigt. An dem Lagerbolzen 147 ist das um eine Achse X' in Pfeilrichtung Y' drehbare Planetenrad 145 gelagert. Das Planetenrad 145 steht einerseits über die Aussenverzahnung 146 mit der Innenverzahnung 143 des Ringteils 142 und andererseits mit der Aussenverzahnung 144 der bei diesem Ausführungsbeispiel als Sonnenrad ausgebildeten Rückwand 141 in Eingriff. An der Scheibe 165 können jedoch auch mehrere mit den Verzahnungen 146 und 144 in Eingriff stehende Planetenräder 145 angeordnet und gelagert werden.

Das Kettenrad 135 sowie die Scheibe 165 sind je mit einer Ausnehmung 133 beziehungsweise 167 versehen, wobei die Ausnehmungen 133 und 167 jeweils durch eine zugeordnete Wand 132 beziehungsweise 169 begrenzt sind. An den einander zugewandten, nicht näher bezeichneten Innenseiten der beiden Wände 132 und 169 ist je eine in der Gesamtheit mit 170 beziehungsweise 175 bezeichnete Rasteinrichtung angeordnet. Die an der Wand 169 der Scheibe 165 vorgesehene Rasteinrichtung 170 hat eine Anzahl in Umfangsrichtung verteilt angeordnete und durch Ausnehmungen 168' beabstandete Rastnocken 168. Die an dem Kettenrad 135 angeordnete Rasteinrichtung 175 ist analog ausgebildet und umfasst eine Anzahl an der Wand 132 in Umfangsrichtung verteilt angeordnete und durch Ausnehmungen 134' beabstandete Rastnocken 134.

Die Rastnocken 168 der Scheibe 165 beziehungsweise die Rastnocken 134 des Kettenrades 135 sind jeweils mit dem relativ zum Kettenrad 135 oder relativ zur Scheibe 165 in axialer Richtung der Antriebswelle 20 verschiebbaren und stirnseitig mit Rasteinrichtungen 60,60' versehenen Schaltglied 50 in Eingriff bringbar. Das auf der Antriebswelle 20 gelagerte und relativ dazu in axialer Richtung in Pfeilrichtung Z oder Z' verschiebbare und beidseitig mit den Rastnocken 52,53 und Ausnehmungen 52',53' versehene Schaltglied 50 wird später in Verbindung mit den Figuren 9 bis 11 näher beschrieben.

Bei dem in Fig.6 dargestellten Ausführungsbeispiel ist die Antriebswelle 20 mit den beiden im Bereich der Scheibe 165 und dem Kettenrad 135 diametral gegenüberliegenden Längsschlitzen 19,19' sowie die einzelnen Teile 50; 60; 61, 62 und 58, 59 um die Achse X in Pfeilrichtung Y um 90° verdreht dargestellt. Die einzelnen Teile sind jedoch analog der vorstehend in Verbindung mit Fig.5 beschriebenen Teile ausgebildet.

Fig.7 zeigt als drittes Ausführungsbeispiel ein in der Gesamtheit mit 230 bezeichnetes und als Ausschnitt dargestelltes Getriebe und man erkennt ein Teilstück des Tretlagergehäuses 15, das auf der Antriebswelle 20 gelagertes Kettenrad 235, eine im Abstand dazu angeordnete und beispielsweise als Sonnenrad ausgebildete Scheibe 265, das zwischen den Teilen 235 und 265 angeordnete Kupplungsglied 50 sowie das teilweise dargestelltes Gehäuse 240. Die Ausbildung des Gehäuses 240 mit den einzelnen in Fig.7 nicht dargestellten Elementen sind beispielsweise analog dem Ausführungsbeispiel gemäss Fig.5 oder Fig.6 ausgebildet. Die mit den Längsschlitzen 19,19' versehene Antriebswelle 20 sowie das daran verschiebbar gelagerte Kupplungsglied 50 und die damit wirkverbundenen Teile 60; 55; 58,59 und 61,62 sind bei diesem Ausführungsbeispiel ebenfalls analog der vorstehend in Verbindung mit Fig.5 beschriebenen Elemente ausgebildet.

Abweichend von dem Ausführungsbeispiel gemäss Fig.5 oder Fig.6 ist bei der in Fig.7 dargestellten Variante an der Stirnseite 235' des Kettenrades 235 eine Rasteinrichtung 275 angeordnet, welche eine Anzahl in Umfangsrichtung verteilt angeordnete Rastnocken 234 und Ausnehmungen 234' aufweist. An der entsprechend zugewandten Stirnseite 265' der Scheibe 265 ist eine Rasteinrichtung 270 angeordnet, welche eine Anzahl in Umfangsrichtung verteilt angeordnete und durch Ausnehmungen 268' beabstandete Rastnocken 268 aufweist. Das auf der Antriebswelle 20 gelagerte und relativ zwischen dem Kettenrad 235 und der Scheibe 265 in axialer Richtung gemäss Pfeilrichtung Z oder Z' verschiebbare und mit den Rasteinrichtungen 60,60' versehene Kupplungsglied 50 ist entweder mit der Rasteinrichtung 270 der Scheibe 265 oder aber mit der Rasteinrichtung 275 des Kettenrades 235 formschlüssig in Eingriff bringbar.

Fig.8 zeigt als Ausführungsbeispiel einen Schnitt gemäss der Linie VIII-VIII in Fig.7 und man erkennt ein in Ansicht dargestelltes Teilstück der auf der Antriebswelle 20 angeordneten Scheibe 265 mit den in Umfangsrichtung an der Stirnseite 265' angeordneten und durch Ausnehmungen 268' im Abstand zueinander angeordneten Rastnocken 268. Die Rastnocken 268 und Ausnehmungen 268' bilden zusammen die Rasteinrichtung 270.

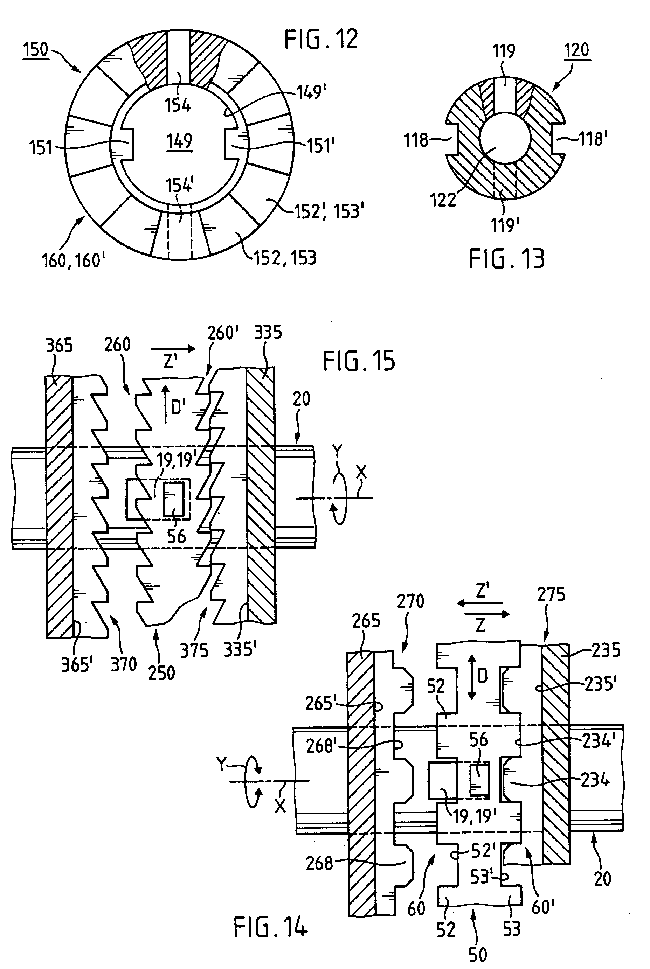

An dieser Stelle wird darauf hingewiesen, dass die in den Ausnehmungen 33,67 der Teile 35,65 sowie in den Ausnehmungen 133,167 der Teile 135,165 angeordneten Rasteinrichtungen 75,70 und 175, 170 gemäss Fig.5 und Fig.6 sowie die an der Stirnseite 235' des Kettenrades 235 angeordnete Rasteinrichtung 275 analog der an der Stirnseite 265' der Scheibe 265 angeordneten und in Fig.8 in Ansicht dargestellten Rasteinrichtung 270 ausgebildet sind. Der Schaltungsablauf des Kupplungsgliedes 50 wird später noch in Verbindung mit Fig.14 im einzelnen beschrieben.

In Fig.9 ist in perspektivischer Ansicht das Kupplungsglied 50 dargestellt und man erkennt ein von einer Durchgangsbohrung 49 durchdrungenes Ringteil 48, welches an beiden, nicht bezeichneten Seitenflächen die in Umfangsrichtung im Abstand zueinander angeordneten Rastnocken 52 und 53 sowie Ausnehmungen 52' und 53' aufweist. Die einzelnen Rastnocken 52,53 und Ausnehmungen 52',53' bilden jeweils die in der Gesamtheit mit 60 beziehungsweise 60' bezeichnete Rasteinrichtung des Kupplungsgliedes 50. In dem Kupplungsglied 50 sind weiterhin zwei das Ringteil 48 in radialer Richtung (quer zur Durchgangsbohrung 49) durchdringende Öffnungen 54,54' angeordnet, welche zur Aufnahme des in den Figuren 5, 6 und 7 dargestellten Mitnehmerteils 56 ausgebildet sind.

In den Figuren 10 und 11 ist das Kupplungsglied 50 in Seitenansicht beziehungsweise in Schnittdraufsicht dargestellt und man erkennt das mit der Durchgangsbohrung 49 versehene Ringteil 48 mit den Öffnungen 54,54'. Zu beiden Seiten des Ringteils 48 erkennt man weiterhin die aus den Rastnocken 52,53 und Ausnehmungen 52',53' gebildeten Rasteinrichtungen 60 und 60'.

Fig.12 zeigt als zweites Ausführungsbeispiel ein in Seitenansicht und teilweise aufgebrochen dargestelltes Kupplungsglied 150, welches im wesentlichen analog dem in Fig.9 bis Fig.11 dargestellten Kupplungsglied 50 ausgebildet ist. Das Kupplungsglied 150 umfasst die an beiden Stirnseiten 160;160' angeordneten Rastnocken 152,153 und Ausnehmungen 152',153' sowie die quer zur Durchgangsbohrung 149 angeordneten, diametral gegenüberliegenden Öffnungen 154, 154'. Abweichend von dem Kupplungsglied 50 gemäss Fig. 9 bis 11 sind bei dem Kupplungsglied 150 gemäss Fig.12 an der Innenwand 149' der Durchgangsbohrung 149 zwei um 90° versetzt zu den Öffnungen 154,154' orientierte und diametral gegenüberliegend angeordnete Nocken 151, 151' vorgesehen, welche in zusammengebautem Zustand mit der mit entsprechend dimensionierten Nuten 118,118' (Fig.13) versehenen Antriebswelle 120 formschlüssig wirkverbunden sind.

In Fig.13 ist in Schnittansicht und teilweise aufgebrochen ein Ausführungsbeispiel der Antriebswelle 120 für das vorstehend beschriebene Kupplungsglied 150 dargestellt und man erkennt zwei diametral gegenüberliegend angeordnete Längsschlitze 119,119', zwei um 90° versetzt dazu angeordnete Nuten 118, 118' sowie die in axialer Richtung der Antriebswelle 120 orientierte Bohrung 122. Die Nuten 118,118' sind derart ausgebildet, dass das Kupplungsglied 150 gemäss Fig.12 mit seinen Nocken 151,151' formschlüssig verbunden sind, wobei aber ein axiales, relativ zur Antriebswelle 120 orientiertes Verschieben des Kupplungsgliedes 150 zwischen den Teilen 35,65 (Fig.5) und 135,165 (Fig.6) sowie 235,265 (Fig.7) noch gewährleistet ist.

Die vorstehend beschriebene und als an sich bekannte Nut/Federverbindung zwischen der Antriebswelle 20 oder 120 und dem Kupplungsglied 50 oder 150 ist eine von mehreren formschlüssigen Verbindungen der einzelnen Teile. Bei einer nicht näher dargestellten Variante zur Erreichung der formschlüssigen Verbindung besteht auch die Möglichkeit, die Durchgangsbohrung 49 oder 149 des Kupplungsgliedes 50 oder 150 sowie die Antriebswelle 20 oder 120 im Bereich zwischen den Teilen 35,65 (Fig.5) und 135,165 (Fig.6) sowie 235,265 (Fig.7) im Profilquerschnitt polygonförmig oder dergleichen auszubilden.

Fig.14 zeigt in grösserem Massstab und als erste Variante ein als schematische Abwicklung dargestelltes Teilstück des Schaltablaufes, wobei im dargestellten Ausführungsbeispiel das Kupplungsglied 50 mit seiner Rasteinrichtung 60' mit der zugeordneten Rasteinrichtung 275 des Kettenrades 235 formschlüssig in Eingriff steht. Durch die in axialer Richtung Z orientierte Bewegung kann das Kupplungsglied 50 mit der Rasteinrichtung 270 der Scheibe 265 formschlüssig in Eingriff gebracht werden. Bei dieser Variante ist das Kupplungsglied 50 bei den in Doppelpfeilrichtung D orientierten Bewegungen (entspricht der Drehbewegung um die Achse X in Pfeilrichtung Y) mit den Rasteinrichtungen 270 oder 275 formschlüssig in Eingriff bringbar. Für ein optimales Ineinandergreifen der am Kupplungsglied 50 vorgesehenen Rasteinrichtungen 60,60' mit den Rasteinrichtungen 270 oder 275 sind, wie in Fig.14 schematisch dargestellt, mindestens die Rastnocken 268 und 234 jeweils mit einer nicht näher bezeichneten Anschrägung versehen. Dieses Ausführungsbeispiel der formschlüssigen Verbindung der Teile 50,235 sowie 50,265 kann beispielsweise bei Tretlagergetrieben mit Rücktrittsbremsen, welche in Doppelpfeilrichtung D belastet werden, Anwendung finden.

Fig.15 zeigt als schematisch dargestellte Abwicklung ein weiteres Ausführungsbeispiel des Schaltablaufs eines zwischen einer Scheibe 365 und einem Kettenrad 335 angeordneten Kupplungsgliedes 250. Bei diesem Ausführungsbeispiel ist an der Stirnseite 365' der Scheibe 365 eine sägezahnförmig ausgebildete Rasteinrichtung 370 und an der Stirnseite 335' des Kettenrades 335 eine Rasteinrichtung 375 angeordnet. Das Kupplungsglied 250 ist zu beiden Seiten je mit einer sägezahnförmig ausgebildeten Rasteinrichtung 260,260' versehen. Wie in Fig.15 dargestellt, ist in dieser Phase die eine Rasteinrichtung 260' mit der Rasteinrichtung 375 des Kettenrades 335 nur teilweise in Eingriff dargestellt. Durch eine in Z' orientierte Bewegung des Kupplungsgliedes 250 gelangt dieses mit der Rasteinrichtung 375 des Kettenrades 335 vollständig und formschlüssig in Eingriff. Die sägezahnförmige Ausbildung der einzelnen Rasteinrichtungen ermöglicht jedoch nur eine Belastung in Pfeilrichtung D'. Bei den einzelnen nicht näher bezeichneten Zähnen sind zur Vermeidung einer vorzeitigen Abnutzung oder zur Vermeidung der Bruchgefahr die einzelnen Zahnspitzen entfernt.

## Patentansprüche

1. Schaltbares Tretlagergetriebe für ein Fahrrad oder dergleichen, mit einer in einem Tretlagergehäuse gelagerten und mit mindestens einer Tretkurbel in Wirkverbindung stehenden hohlzylindrischen Antriebswelle, einem daran gelagerten Kettenrad, einem in parallelem Abstand dazu angeordneten und am äusseren Umfang mit mindestens einem verzahnten Planetenrad in Eingriff stehenden oder zur Lagerung desselben ausgebildeten Sonnenrad und einem zwischen dem Kettenrad und dem Sonnenrad an der Antriebswelle verschiebbar angeordneten Kupplungsglied, welches mit einer die Antriebswelle in axialer Richtung durchdringenden und an den beiden Enden jeweils mit einem Schaltglied versehenen Schaltachse in Wirkverbindung steht und in Abhängigkeit des jeweils betätigten Schaltgliedes entweder mit dem Kettenrad oder mit dem Planetenrad formschlüssig in Eingriff bringbar ist, **dadurch gekennzeichnet,** dass das Sonnenrad (65;165;265;365) sowie das Kettenrad (35;135;235;335) an den dem Kupplungsglied zugewandten Seiten jeweils mit einer in Umfangsrichtung orientierten Rasteinrichtung (70,75;170,175;270,275;370,375) und das Kupplungsglied (50;150;250) beidseitig mit einer analog ausgebildeten und in Umfangsrichtung orientierten Rasteinrichtung (60,60'; 160,160';260,260') versehen sind, wobei das für den formschlüssigen Eingriff der einander zugewandten Rasteinrichtungen relativ zu dem Sonnenrad beziehungsweise zu dem Kettenrad auf der Antriebswelle (20) verschiebbaren Rupplungsglied (50;150;250) durch einen dieses sowie die Antriebwelle quer zu deren Längsachse (X) durchdringenden Mitnehmer (56) mit der von den Schaltgliedern (25;25') in Richtung der Längsachse (X) verschiebbaren Schaltachse (55) wirkverbunden ist.

2. Schaltbares Tretlagergetriebe nach Anspruch 1, **dadurch gekennzeichnet**, dass die an den einander zugewandten Seiten des Sonnenrades (65;165;265) und des Kettenrades (35;135; 235) sowie die an beiden Seiten des Kupplungsglieds (50;150) angeordneten Rasteinrichtungen jeweils als in Umfangsrichtung orientierte und formschlüssig miteinander in Eingriff bringbare Stirnverzahnungen ausgebildet sind.

3. Schaltbares Tretlagergetriebe nach Anspruch 1, **dadurch gekennzeichnet,** dass das Sonnenrad (65;165) sowie das Kettenrad (35;135) an den einander zugewandten Seiten jeweils mit einer auf der gemeinsamen Längsachse (X) etwa sacklochförmig ausgebildeten Kammer (67,33;167,133) versehen sind, an dessen Innenwand (69,32;169,132) die mit dem zuführbaren Kupplungsglied (50;150) formschlüssig in Eingriff bringbaren und in Umfangsrichtung orientierten Rasteinrichtungen (70,75;170, 175) angeordnet sind.

4. Schaltbares Tretlagergetriebe nach Anspruch 1, **dadurch gekennzeichnet**, dass die an den einander zugewandten Seiten des Sonnenrades (65;165;265) und des Kettenrades (35;135;235) sowie an beiden Seiten des Kupplungsglieds (50;150) angeordneten und formschlüssig miteinander in Eingriff bringbaren Rasteinrichtungen (70,75;170,175;270,275) jeweils mit mehreren in Umfangsrichtung verteilt zueinander angeordneten und durch Ausnehmungen (52',53';152',153') beabstandeten Rastnokken (52,53;152,153) versehen sind.

5. Schaltbares Tretlagergetriebe nach den Ansprüchen 1 und 4, **dadurch gekennzeichnet**, dass das Sonnenrad (265) und das Kettenrad (235) an den einander zugewandten Stirnseiten (265',235') jeweils mit mehreren in Umfangsrichtung verteilt zueinander angeordneten und durch Ausnehmungen (268';234') beabstandete Rastnocken (268,234) aufweist und das Kupplungsglied (50) für den formschlüssigen Eingriff an beiden Seiten mit den durch die Ausnehmungen (52',53') beabstandeten Rastnocken (52,53) versehen ist.

6. Schaltbares Tretlagergetriebe nach Anspruch 1, **dadurch gekennzeichnet**, dass das Sonnenrad (365) sowie das Kettenrad (335) an den einander zugewandten Stirnseiten (365',335') je mit einer sägezahnförmigen Rasteinrichtung (370,375) versehen sind, und das zwischen dem Sonnenrad (365) und dem Kettenrad (335) angeordnete Kupplungsglied (250) für den formschlüssigen Eingriff an beiden Seiten eine analog sägezahnförmig ausgebildete Rasteinrichtung (260,260') aufweist.

7. Schaltbares Tretlagergetriebe nach Anspruch 1, **dadurch gekennzeichnet**, dass der quer zur Längsachse (X) das Kupplungsglied (50;150;250) sowie die hohlzylindrische Antriebswelle (20) durchdringende und mit der Schaltachse (55) wirkverbundene Mitnehmer (56) in zwei diametral gegenüberliegenden Längsschlitzen (19,19') der Antriebswelle (20) geführt ist, wobei die Längsschlitze (19,19') in axialer Richtung dem maximalen Verstellbereich des zwischen dem Sonnenrad (65;165; 265;365) und dem Kettenrad (35;135;235;335) vorgesehenen Abstands ausgebildet sind.

8. Schaltbares Tretlagergetriebe nach Anspruch 7, **dadurch gekennzeichnet**, dass das in Richtung der Längsachse (X) verschiebbar an der Antriebswelle (20) angeordnete Kupplungsglied (50;150;250) zusätzlich über eine Nut-/Federverbindung drehfest mit derselben wirkverbunden ist.

9. Schaltbares Tretlagergetriebe nach Anspruch 1, **dadurch gekennzeichnet**, dass die Schaltglieder (25,25') jeweils mit einem daran angeordneten rohrförmigen Führungsteil (24) sowie einem mit der Schaltachse (55) in Eingriff bringbaren Stössel (23) in einer achsgleich auf der Längsachse (X) der Antriebswelle (20) an jeder Tretkurbel (1,2) vorgesehenen Ausnehmung (3) angeordnet sowie an den Tretkurbeln im Abstand zu der Längsachse (X) mit einem Befestigungsmittel (29;29') derart gelagert sind, dass bei Betätigung des einen Schaltgliedes das gegenüberliegende Schaltglied relativ zu der jeweiligen Tretkurbel auslenkbar ist.

10. Schaltbares Tretlagergetriebe nach Anspruch 9, **dadurch gekennzeichnet**, dass die Schaltglieder (25,25') im Profilquerschnitt U-förmig ausgebildet und etwa haubenförmig umgreifend an den Tretkurbeln (1,2) befestigt sind.

## Claims

1. Shiftable bottom bracket gear for a bicycle or the like, having a hollow cylindrical drive shaft, which is disposed in a bottom bracket housing and is in operative connection with at least one pedal crank, a chain wheel disposed thereon, a sun wheel spaced parallel thereto and engaging at its outer circumference at least one toothed planet wheel or constructed for the support thereof, and a clutch member, which is displaceably arranged between the chain wheel and the sun wheel on the drive shaft, and which is in operative connection with a selector shaft passing through the drive shaft in the axial direction and respectively provided with a selector member on the two ends, and which may be brought positively into engagement either with the chain wheel or with the planet wheel in dependence on the respectively operated selector member, characterised in that on the sides facing the clutch member the sun wheel (65; 165; 265; 365) and also the chain wheel (35; 135; 235; 335) are respectively provided with a catch means (70, 75; 170, 175; 270, 275; 370, 375) oriented in circumferential direction and the clutch member (50; 150; 250) is provided on both sides with a similarly constructed catch means (60, 60'; 160, 160'; 260, 260') oriented in circumferential direction, whereby the clutch member (50; 150; 250), which may be displaced relative to the sun wheel or to the chain wheel on the drive shaft (20) for the positive engagement of the facing catch means, is operatively connected to the selector shaft (55), which may be displaced by the selector members (25; 25') in the direction of the longitudinal axis (X), by a follower means (56) passing through said clutch member and also the drive shaft transversely to its longitudinal axis (X).

2. Shiftable bottom bracket gear according to Claim 1, characterised in that the catch means arranged on the facing sides of the sun wheel (65; 165; 265) and the chain wheel (35; 135; 235) and also on both sides of the clutch member (50; 150) are respectively constructed as spur tooth arrangements which are oriented in circumferential direction and may be brought positively into engagement with one another.

3. Shiftable bottom bracket gear according to Claim 1, characterised in that on the facing sides the sun wheel (65; 165) and also the chain wheel (35; 135) are respectively provided with a chamber (67, 33; 167, 133) constructed generally in the form of a blind hole on the common longitudinal axis (X), the catch means (70, 75; 170, 175), which may be brought positively into engagement with the feedable clutch member (50; 150) and are oriented circumferential direction, being arranged on the internal wall (69, 32; 169, 132) of said chamber.

4. Shiftable bottom bracket gear according to Claim 1, characterised in that the catch means (70, 75; 170, 175; 270, 275), which are arranged on the facing sides of the sun wheel (65; 165; 265) and the chain wheel (35; 135; 235) as well as on both sides of the clutch member (50; 150) and may be brought positively into engagement with one another, are respectively provided with a plurality of catch cams (52, 53; 152, 153) distributed in circumferential direction relative to one another and spaced by recesses (52', 53'; 152', 153').

5. Shiftable bottom bracket gear according to Claims 1 and 4, characterised in that on the facing faces (265', 235'), the sun wheel (265) and the chain wheel (235) respectively have a plurality of catch cams (268, 234) distributed in circumferential direction relative to one another and spaced by recesses (268'; 234'), and the clutch member (50) is provided for positive engagement on both sides with the catch cams (52, 53) spaced by the recesses (52', 53').

6. Shiftable bottom bracket gear according to Claim 1, characterised in that on the facing faces (365', 335'), the sun wheel (365) and the chain wheel (335) are respectively provided with a sawtooth-shaped catch means (370, 375), and the clutch member (250) arranged between the sun wheel (365) and the chain wheel (335) has a similarly constructed sawtooth-shaped catch means (260, 260') for the positive engagement on both sides.

7. Shiftable bottom bracket gear according to Claim 1, characterised in that the follower means (56), which passes through the clutch member (50; 150; 250) and the hollow cylindrical drive shaft (20) transversely to the longitudinal axis (X) and is operatively connected to the selector shaft (55), is guided into two diametrically opposed longitudinal slits (19, 19') of the drive shaft (20), the longitudinal slits (19, 19') being constructed in the axial direction in the maximum adjustment range of the distance provided between the sun wheel (65; 165; 265; 365) and the chain wheel (35; 135; 235; 335).

8. Shiftable bottom bracket gear according to Claim 7, characterised in that the clutch member (50; 150; 250) displaceably arranged on the drive shaft (20) in the direction of the longitudinal axis (X) is additionally operatively connected via a groove/spring connection against rotation therewith.

9. Shiftable bottom bracket gear according to Claim 1, characterised in that the selector members (25, 25') are respectively arranged with a tubular guide part (24) arranged thereon and a push rod (23), which may be brought into engagement with the selector shaft (55), in a recess (3) provided on each pedal crank (1, 2) co-axially with the longitudinal axis (X) of the drive shaft (20) and are also mounted on the pedal cranks at a distance from the longitudinal axis (X) with an attachment means (20; 29') in such a way that on operation of one selector member, the opposite selector member may be moved out relative to the respective pedal crank.

10. Shiftable bottom bracket gear according to Claim 9, characterised in that the selector members (25, 25') are U-shaped in profile cross-section and are attached to the pedal cranks (1, 2) to enclose these in a generally hood-like form.

## Revendications

1. Transmission manoeuvrable de pédalier pour bicyclette ou similaire, présentant un arbre menant cylindrique creux logé dans un boîtier de pédalier et relié par action coordonnée à au moins une manivelle de pédalier, une roue dentée logée contre celui-ci, une roue solaire disposée parallèlement à celle-ci avec un écartement et s'engrenant au niveau de sa périphérie externe avec au moins un pignon satellite denté ou conçue pour loger celui-ci, et un élément d'accouplement disposé de façon mobile contre l'arbre menant entre la roue dentée et la roue solaire, lequel élément d'accouplement est relié par action coordonnée à un axe de manoeuvre pénétrant l'arbre menant dans la direction axiale et pourvu à ses deux extrémités d'un élément de manoeuvre, et peut s'engrener de façon mécanique, en fonction de l'élément de manoeuvre actionné, avec la roue dentée ou avec le pignon satellite, **caractérisée en ce que** la roue solaire (65 ; 165 ; 265 ; 365) et la roue dentée (35 ; 135 ; 235 ; 335) sont munies, sur leurs côtés dirigés vers l'élément d'accouplement, d'un dispositif d'encliquetage (70, 75 ; 170,175 ; 270, 275 ; 370, 375) orienté dans la direction périphérique, et l'élément d'accouplement (50 ; 150 ; 250) est pourvu des deux côtés d'un dispositif d'encliquetage (60, 60' ; 160, 160' ; 260, 260') orienté dans la direction périphérique et conçu de façon analogue, l'élément d'accouplement (50 ; 150 ; 250) pouvant être déplacé sur l'arbre menant (20) pour engrener de façon mécanique les dispositifs d'encliquetage disposés l'un vers l'autre par rapport à la roue solaire ou à la roue dentée étant relié par action coordonnée avec l'axe de manoeuvre (55) pouvant être déplacé depuis les éléments de manoeuvre (25 ; 25') dans la direction de l'axe longitudinal (X) par un entraînement (56) pénétrant celui-ci et l'arbre menant perpendiculairement à son axe longitudinal (X).

2. Transmission manoeuvrable de pédalier selon la revendication 1, **caractérisée en ce que** les dispositifs d'encliquetage disposés sur les côtés dirigés les uns vers les autres de la roue solaire (65 ; 165 ; 265) et de la roue dentée (35 ; 135 ; 235), ainsi que ceux disposés des deux côtés de l'élément d'accouplement (50 ; 150) sont respectivement conçus en tant que dentures droites orientées dans la direction périphérique et pouvant s'engrener par action mécanique.

3. Transmission manoeuvrable de pédalier selon la revendication 1, **caractérisée en ce que** la roue solaire (65 ; 165) et la roue dentée (35 ; 135) sont pourvues, sur les côtés dirigés les uns vers les autres, d'une chambre (67, 33 ; 167, 133) environ en forme de trou borgne sur l'axe longitudinal (X), contre la paroi interne (69, 32 ; 169, 132) de laquelle sont disposés les dispositifs d'encliquetage (70, 75 ; 170, 175) orientés dans la direction périphérique et pouvant s'engrener de façon mécanique avec l'élément d'accouplement guidable (50 ; 150).

4. Transmission manoeuvrable de pédalier selon la revendication 1, **caractérisée en ce que** les dispositifs d'encliquetage (70, 75 ; 170, 175 ; 270, 275) disposés contre les côtés dirigés les uns vers les autres de la roue solaire (65 ; 165 ; 265) et de la roue dentée (35 ; 135 ; 235), ainsi que des deux côtés de l'élément d'accouplement (50 ; 150) et pouvant s'engrener les uns avec les autres par action mécanique sont respectivement pourvus de plusieurs ergots d'encliquetage (52, 53 ; 152, 153) répartis dans la direction périphérique et espacés par des creux (52', 53' ; 152', 153').

5. Transmission manoeuvrable de pédalier selon les revendications 1 et 4, **caractérisée en ce que** la roue solaire (265) et la roue dentée (235) présentent, sur les faces (265', 235') dirigées les unes vers les autres, respectivement plusieurs ergots d'encliquetage (268, 234) répartis dans la direction périphérique et espacés par des creux (268', 234'), et en ce que l'élément d'accouplement (50) est pourvu des deux côtés, pour s'engrener par action mécanique, d'ergots d'encliquetage (52, 53) espacés par des creux (52', 53').

6. Transmission manoeuvrable de pédalier selon la revendication 1, **caractérisée en ce que** la roue solaire (365) et la roue dentée (335) sont chacune pourvues sur leurs faces dirigées l'une vers l'autre (365', 335') d'un dispositif d'encliquetage (370, 375) en forme de dents de scie, et en ce que l'élément d'accouplement (250) disposé entre la roue solaire (365) et la roue dentée (335) présente, sur ses deux côtés, pour s engrener par action mécanique, un dispositif d'encliquetage (260, 260') conçu de façon analogue en dents de scie.

7. Transmission manoeuvrable de pédalier selon la revendication 1, **caractérisée en ce que** l'élément d'entraînement (56) pénétrant l'élément d'accouplement (50 ; 150 ; 250) et l'arbre menant (20) cylindrique creux perpendiculairement à l'axe longitudinal (X), et coordonné à l'axe de manoeuvre (55), est guidé dans deux fentes longitudinales (19, 19') de l'arbre menant (20) diamétralement opposées, les fentes longitudinales (19, 19') étant conçues dans la direction axiale dans la plage de réglage maximum de l'écartement prévu entre la roue solaire (65, 165 ; 265 ; 365) et la roue dentée (35 ; 135 ; 235 ; 335).

8. Transmission manoeuvrable de pédalier selon la revendication 7, **caractérisée en ce que** l'élément d'accouplement (50 ; 150 ; 250) mobile dans la direction de l'axe longitudinal (X) et disposé contre l'arbre menant (20) est en outre relié par action coordonnée de résistance à la traction avec celui-ci via une liaison par rainure/ressort.

9. Transmission manoeuvrable de pédalier selon la revendication 1, **caractérisée en ce que** les éléments de manoeuvre (25, 25') avec chacun respectivement un élément de guidage (24) en forme de tube disposé contre ceux-ci et ceux-ci ainsi' qu'avec un coulisseau (23) pouvant être amené en prise avec l'axe de manoeuvre (55) sont respectivement disposés dans un creux (3) de même axe ménagé contre chaque manivelle de pédalier (1, 2) sur l'axe longitudinal (X) de l'arbre menant (20) et logés au moyen d'un élément de fixation (29, 29') contre les manivelles de pédalier avec un espacement par rapport à l'axe longitudinal (X) de façon telle que, en cas d'actionnement d'un élément de manoeuvre, l'élément de manoeuvre opposé peut pivoter par rapport à la manivelle de pédalier respective.

10. Transmission manoeuvrable de pédalier selon la revendication 9, **caractérisée en ce que** les éléments de manoeuvre (25, 25') sont conçus pour présenter un profil en coupe en forme de U et sont fixés aux manivelles de pédalier (1, 2) de façon à les entourer comme un couvercle.
